# EUROPEAN PATENT SPECIFICATION

(11) **EP 4 245 993 B1**
(45) Date of publication and mention of the grant of the patent: **04.03.2026**
(21) Application number: 22162994.2
(22) Date of filing: 18.03.2022
(51) Int. Cl.: F03D 80/00

(54) **A METHOD OF ROTATING A WIND TURBINE BLADE**
VERFAHREN ZUM DREHEN EINER WINDTURBINENSCHAUFEL
PROCÉDÉ DE ROTATION DE PALE D'ÉOLIENNE

(43) Date of publication of application: 20.09.2023
(73) Proprietor: LM Wind Power A/S, 6000 Kolding (DK)
(72) Inventor: IBSEN, Christian, 6000 Kolding (DK); KARSBÆK, Brian, 6000 Kolding (DK); KALLESTRUP, David, 6000 Kolding (DK)
(74) Representative: COPA Copenhagen Patents

(56) References cited:
- US-A1- 2015 028 608
- US-A1- 2021 108 616
- US-A1- 2021 291 350

## Description

### Field of the invention

The present invention relates to a method of rotating a wind turbine blade and to an assembly for rotating a wind turbine blade, for example in the context of carrying out a post-moulding operation.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine rotor blades are typically made from a fibre-reinforced polymer material, comprising a pressure side shell half and a suction side shell half, also called blade halves. The cross-sectional profile of a typical blade includes an airfoil for creating an air flow leading to a pressure difference between both sides. The resulting lift force generates torque for producing electricity.

The shell halves of rotor blades are often manufactured using blade moulds. First, a blade gel coat or primer is applied to the mould. Subsequently, fibre reinforcement and/or fabrics are placed into the mould followed by resin infusion. A vacuum is typically used to draw epoxy resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding. The shell halves are assembled by being glued or bolted together substantially along a chord plane of the blade.

After the blade body has been moulded and removed from the blade mould, typically a number of post moulding operations are carried out, which may require rotating the blade. These may include external blade surface grinding or coating operations. To this end, some known approaches rely on blade carts comprising a rotatable frame to receive a portion of the moulded wind turbine blade. Thus, the blade may be supported during a rotation motion, which may be carried out using a set of rollers or drive wheels, or by using a chain and pulley system.

Usually, such known devices comprise a root station with rollers and a corresponding tip station to assist the rotation of the blade. Other known systems use a crane to lift and rotate the blade from two or more suspension points.

However, as wind turbine blades are becoming longer and heavier, existing systems are associated with major challenges in terms of forces required to rotate the blade and maintaining the blade in the desired position. As modern blades may have a weight of more than 50 tons, work safety may be compromised when using existing solutions.

It is therefore a first object of the present invention to provide a safer and more cost-efficient way of rotating wind turbine blades for post-moulding operations.

It is a further object of the present invention to provide a more flexible and less energy-consuming method and system for wind turbine blade rotation.

An example of a document representing the prior art is US 2021/108616 A1.

### Summary of the invention

The present invention addresses one or more of the above-discussed objects by providing a method of rotating a wind turbine part, preferably a wind turbine blade, comprising the steps of
providing a wind turbine part, preferably a wind turbine blade,
determining the centre of gravity of the wind turbine part,
providing a first rotatable fixture and a second rotatable fixture, each comprising a circular or partly circular periphery and a centre,
attaching the first fixture to a first portion of the wind turbine part,
attaching the second fixture to a second portion of the wind turbine part, such that the centre of gravity of the wind turbine part is located between the first fixture and the second fixture, wherein the respective centres of the first fixture and the second fixture are aligned with the centre of gravity of the wind turbine part for defining a common rotational axis, and
rotating the wind turbine part about said common rotational axis by simultaneously rotating the first and the second fixture.

As modern wind turbine blades usually have a pre-bent, twisted and/or curved blade shape, the centre of gravity of the blade as a whole is often eccentric. This means that certain rotational positions of the blade about its longitudinal axis imply a substantial amount of force to stabilize the blade in said position or to rotate the blade to said position. It was found that with the solution of the present invention almost no rotational forces are present regardless of the rotational position the blade. Thus, the blade can be easily and safely rotated by rotating the attached fixtures according to the arrangement of the present invention.

Also, the solution of the present invention helps to keep and hold the blade in any given rotational position without having to apply the amounts of force required for known techniques, which results in a more energy efficient and safer method. Thus, full access is provided to the blade for post-moulding operations, wherein no hydraulic equipment is required for blade rotation contrary to known methods.

It is particularly preferred that the wind turbine part is a wind turbine blade. The blade length is advantageously at least 40 metres, or at least 45 metres, or at least 50 metres, or at least 55 metres, preferably at least 60 metres. In other embodiments, the wind turbine part may be a tower, or part thereof, or a part of a wind turbine blade, such as a shell half or a shear web of a blade.

The wind turbine blade will be typically moulded in a blade mould, wherein two blade halves are bonded to each other. Subsequently, the blade can be removed from the blade mould to carry out one or more post-moulding operations. It is in this context that the method of the present invention is advantageously used to allow access to the blade from all sides.

The step of determining the centre of gravity of the wind turbine part, preferably the wind turbine blade, is advantageously carried out by calculation, for example using a CAD model. Alternatively, or in addition, experimental methods may be used to determine the centre of gravity of the wind turbine blade. Such experimental methods may, for example, rely on a load cell system or a pivotable table in combination with a force transducer, wherein the location of centre of gravity can be derived from moment measurements. Exemplary methods for determining the position of the centre of gravity of blades are disclosed in RU2224228C1, KR101496995B1 or in Noever-Castelos et al., Validation of a modeling methodology for wind turbine rotor blades based on a full-scale blade test, Wind Energ. Sci., 7, 105-127, 2022.

A first fixture and a second fixture are provided, each comprising a circular or partly circular periphery and a geometric centre. It is preferred that the first fixture and the second fixture are substantially circular fixtures, i.e., having a substantially circular circumference or periphery. Thus, the first and second fixtures preferably have a substantially circular cross section.

The first fixture and the second fixture are advantageously rotatable about at least one axis passing through their respective centres. The centre of a fixture with a circular periphery is the point equidistant from the points on the circular periphery. In some embodiments, the first fixture and the second fixture are formed as circular plates or circular frames. It is particularly preferred that the first fixture is a root end fixture, preferably a circular root end fixture, which can be mounted to a root end of the blade.

Preferably, the first and second fixture are arranged to rotate, for example relative to a base, about a substantially horizontal axis in order to vary the orientation of the blade held in the fixtures. It is preferred that the blade is arranged in a substantial horizontal orientation when supported by the first and second fixtures. Thus, the longitudinal axis of the blade will be substantially horizontal, or parallel to the floor surface, in this embodiment. It is preferred that the tip end of the blade is located 1-3 metres above the ground, when the blade is arranged in the first and second fixtures, regardless of the rotational position of the blade.

It is preferred that the first fixture is fixed to the root end of the wind turbine blade, particularly to the bolt circle at the root end of the blade. Typically, the root end of the blade is substantially circular and comprises a circular arrangement of axially extending fastening bolts, which can be used to attach the blade to a hub of a wind turbine. Thus, in a preferred embodiment, the first fixture comprises a circular arrangement of bores and/or bushings for receiving the axially extending fastening bolts of the root end of the wind turbine blade, for attaching the first fixture to the root end of the wind turbine blade.

To this end, corresponding nuts could be used for attaching the bolts to the fixture after having passed the bolts through the corresponding bores of the fixture. Preferably, the circular arrangement of bores and/or bushings of the first fixture is eccentric with respect to the first fixture, i.e., the centre of the circular arrangement of bores and/or bushings is offset from the centre of the first fixture. It has been found that such arrangement allows for a particularly good alignment with the centre of gravity of pre-bent blades, and thus in an efficient blade rotation process.

It is preferred that the second fixture is attached to a part of the wind turbine blade that is closer to the tip end than to the root end of the blade. In a preferred embodiment, the second fixture comprises a first support having a support surface to receive a pressure side of a wind turbine blade, and a second support having a support surface to receive a suction side of a wind turbine blade. At least one of said first support and said second support may be selectively actuatable to engage with a surface of a wind turbine blade, preferably linearly actuatable, from a first withdrawn position where the support is located away from a wind turbine blade received within said frame to a second advanced position where the support bears against a surface of a wind turbine blade received within said frame.

The centre of gravity of the blade is located between the first fixture and the second fixture, wherein the respective centres of the first fixture and the second fixture are aligned with the centre of gravity of the wind turbine blade for defining a common rotational axis. This can be achieved by designing the size and shape of the first and second fixture as well as the respective attachment structures or holding device of the fixtures determining the mounting position of the blade to the respective fixture accordingly, i.e. such that all three points, i.e. the centre of gravity of the wind turbine blade, the centre of the first fixture and the centre of the second fixture fall on a single straight line, which is preferably substantially horizontal, which corresponds to said rotational axis.

Typically, owing to the pre-bent, twisted and/or curved shape of modern wind turbine blades, the first and second fixtures are designed such that they hold the respective blade portion in an eccentric position with respect to each respective fixture. Thus, the respective geometric centres of the cross section of the blade at the first and second portions will typically not coincide with the respective geometric centres of the first and second fixtures. It is therefore particularly preferred that the centre of the blade cross section at the first portion is offset from the centre of the first fixture. Likewise, it is particularly preferred that the centre of the blade cross section at the second portion is offset from the centre of the second fixture. Thus, in a particularly preferred embodiment, the blade rotation is eccentric with respect to the centre of the circular blade root.

The wind turbine blade can then be rotated about said common rotational axis by simultaneously rotating the first and the second fixture, with minimal force required for the rotation. Thus, the blade can be rotated clockwise or anticlockwise about said rotational axis, for example between end positions about 180 degrees apart. This advantageously enables carrying out a number of post-moulding operations such as applying a surface finishing, coating, paint, or carrying out an inspection or repair process. In a particularly preferred embodiment, the common rotational axis is a substantially horizontal axis. Once the desired rotational blade position is achieved, further blade rotation may advantageously be prevented by blocking rotation of the first and second fixtures, for example, by applying a brake or triangular stoppers for securing the fixtures against unintentional rotation. In other embodiments a pin could be passed through a corresponding bores in the respective fixture and its base to prevent unintentional rotation of the fixture.

Thus, it is particularly preferred that each of the respective centres of the first fixture and the second fixture and the centre of gravity of the wind turbine blade lie on the common rotational axis, which is preferably substantially horizontally oriented.

In a preferred embodiment, the first portion of the wind turbine blade is spaced apart from the second portion of the wind turbine blade in the spanwise direction of the blade. The spanwise distance between the first portion and the second portion is preferably at least 10 metres, more preferably at least 20 metres, most preferably at least 30 metres. The first portion of the blade is preferably the root end of the blade. The second portion is preferably located within a length interval of 10-90%, more preferably 40-90% of the blade length as calculated from the root end to the tip end, i.e., 0% being the root end, and 100% being the tip end. Preferably, the second portion is closer to the tip end than to the root end of the blade.

In a preferred embodiment, each of the first fixture and the second fixture comprise a holding device or attachment structure for releasable fastening at least part of the wind turbine blade to the respective fixture. Preferably, the holding device is adjustable to accommodate for different blade size or for being attachable to various locations along the wind turbine blade. In some embodiments, the holding device of the second fixture comprises a substantially cushioned surface for engaging the surface of the wind turbine blade. In a preferred embodiment, the holding device of the second fixture comprises a bracket or a set of jaws.

In a preferred embodiment, the holding device of the first fixture comprises a plurality of fastening member arranged along a circular or partly circular path. It is particularly preferred that the first fixture comprises a plurality of bushings arranged along a circular or partly circular path. In a preferred embodiment, the circular or partly circular path is eccentric with respect to the first fixture.

In a preferred embodiment, the first fixture comprises a circular plate. Preferably, the first fixture is shaped as a circular plate or disk with a circular opening provided within the plate or disk. Said circular opening can be advantageously aligned with a circular opening of the blade at its root end, thus allowing access to an interior portion within the blade. It is particularly preferred that the circular opening is eccentric with respect to the circular plate or disk of the first fixture, such that the centre of the circular opening does not coincide with the centre of the circular plate or disk. Such design will allow access to the inside of the blade while allowing the centre of gravity of the blade to be aligned with the respective centres of the first and second fixtures. It is also preferred the diameter of the substantially circular opening of the first fixture corresponds to the diameter of the substantially circular opening at the root end of the blade, such that both openings can be aligned when the first fixture is attached to the blade.

In a preferred embodiment, the first fixture comprises a circular opening, wherein a plurality of bores and/or fastening member, such as bushings, are arranged along a circular or partly circular path surrounding the opening. Preferably, the centre of the circular path coincides with the centre of the circular opening, which is offset from the centre of the first fixture.

In a preferred embodiment, the second fixture comprises a frame with a circular periphery. Thus, the second fixture may take the form of a circular frame with a plurality of frame bars extending between the circular periphery. The second fixture preferably comprises a bracket or a set of jaws which can engage with the blade, preferably with a blade portion which is located from 50 to 100% of the blade length as seen from the root end. Typically, the centre of the cross section of the blade portion engaged by the second fixture will be offset from the centre of the second fixture. Thus, the rotation of the blade will typically be an eccentric rotation with respect to the second fixture. It is also preferred that the rotation of the blade is an eccentric rotation with respect to the geometric centre of the substantially circular cross section of the blade at the blade root end.

In a preferred embodiment, the first fixture and/or the second fixture are rotatably arranged on a respective base member, wherein the base members preferably rest on a floor surface, such as a factory floor surface. It is preferred that each of the first and second fixtures are releasably mounted in or on their respective base member, wherein the base member is preferably fixed to the floor surface. Thus, one or both of the fixtures can be mounted to the blade either in the blade mould or after lifting the blade from the blade mould, e.g. using a crane, and the blade with the attached fixtures can then be lowered into the respective bases such that the first and second fixtures are received in/on their respective bases. Typically, when the blade is mounted in the first and second fixtures the blade is not able to rotate relative to the fixtures.

In a preferred embodiment, the respective bases of the respective fixtures comprise a plurality of rollers or drive wheels mounted on the base, wherein the first or second fixture is mounted on said rollers or drive wheels and is operable to be rotated on said rollers or drive wheels. Thus, it is preferred that the base serves to support the respective fixture such that the fixture is rotatable relative to the base. In a preferred embodiment, each base may be provided with drive wheels which engage the partly circular or circular periphery of the frame, such as by frictional engagement. In some embodiments, the base comprises a gear arrangement. The rollers or drive wheels of the base may be rotated by using a motor, such as an electric motor.

In some embodiments, the base comprises a plurality of trolley wheels operable to wheel said base on the floor surface in any direction. Thus, the base and the supported fixture may be used as mobile unit which can be moved between different locations.

In some embodiment a third fixture can be attached to another portion of the blade, the third fixture having a circular or partly circular periphery and a centre. In such embodiments, the respective centres of the first, second and third fixtures are aligned with the centre of gravity of the wind turbine blade for defining a common rotational axis.

Rotation of the blade can than be achieved by simultaneously rotating the first, second and third fixture.

In a preferred embodiment, the method further comprising the steps of attaching a clamping collar around a third portion of the wind turbine blade, the clamping collar comprising a circular or partly circular periphery and a centre, wherein the centre of the clamping collar and the respective centres of the first fixture and the second fixture are aligned with the centre of gravity of the wind turbine blade for defining a common rotational axis, removing the first fixture from the wind turbine blade, and rotating the wind turbine blade about said common rotational axis by simultaneously rotating the second fixture and the clamping collar. The third portion of the wind turbine blade is preferably located between the first portion and the second portion.

In a preferred embodiment, the clamping collar comprises an opening, preferably a substantially circular opening, for receiving a portion of the wind turbine blade therein, wherein the opening is eccentric with respect to the clamping collar. Thus, it is preferred that the centre of said opening is offset from the centre of the clamping collar.

In a preferred embodiment, the clamping collar comprises a first piece and a second piece, each having a substantially semi-circular periphery, defining an opening there between. The first piece and the second piece are advantageously connectable to each other for closing the clamping collar around the third portion of the wind turbine blade. Thus, the clamping collar can be applied around the blade at a third blade portion, which is preferably in the vicinity of the root end of the blade, preferably within the first 5% of the blade length as seen from the root end. Using the clamping collar provides an effective way of replacing the functionality of the first fixture by the clamping collar, for example, in situation where a free root end of the blade is required during post-moulding operations. Thus, after having applied the clamping collar to the blade, the first fixture can be removed from the blade, and blade rotation can be achieved by simultaneously rotating the second fixture and the clamping collar.

In another aspect, the present invention relates to an assembly for rotating a wind turbine part, preferably a wind turbine blade, the assembly comprising
a wind turbine part, preferably a wind turbine blade,
a first fixture and a second fixture, each comprising a circular or partly circular periphery and a centre, the first fixture being attached to a first portion of the wind turbine part, and the second fixture being attached to a second portion of the wind turbine part, wherein the centre of gravity of the part is located between the first fixture and the second fixture, and wherein the respective centres of the first fixture and the second fixture are aligned with the centre of gravity of the wind turbine part for defining a common rotational axis for rotating the wind turbine part. The assembly is advantageously used to support the wind turbine part above a ground surface, for example for carrying out a post-moulding operation.

In a preferred embodiment of the assembly, the first fixture and/or the second fixture are rotatably arranged on a respective base member, wherein the base members preferably rest on a floor surface, such as a factory floor surface. The first fixture and the second fixture preferably have a circular periphery and a diameter of 5-12 metres, more preferably 6-10 meters. In a preferred embodiment, each base member comprises a set of rollers or drive wheels for engaging and rotating the respective fixture arranged in the base member.

In the assembly of the present invention, the common rotational axis is preferably a substantially horizontal axis, which is preferably substantially parallel to a floor surface, such as a factory floor surface. Preferably, each of the first fixture and the second fixture of the assembly comprise a holding device for releasably fastening at least part of the wind turbine blade to the respective fixture. In a preferred embodiment, the holding device of the second fixture comprises a bracket or a set of jaws. In another preferred embodiment, the holding device of the first fixture comprises a plurality of bores and/or fastening members arranged along a circular or partly circular path. Preferably, the circular or partly circular path is eccentric with respect to the first fixture.

The first fixture of the assembly may comprise a circular plate or circular disk. The second fixture of the assembly may comprise a circular frame. In a preferred embodiment, the assembly also comprises a clamping collar, as described above, comprising a circular or partly circular periphery and a centre, wherein the centre of the clamping collar is aligned with the centre of gravity of the wind turbine blade for defining a common rotational axis.

In another aspect, the present invention relates to an apparatus for turning or rotating a wind turbine blade with a substantially circular root end, the apparatus comprising a rotatable first fixture and a rotatable second fixture, each comprising a circular or partly circular periphery, and each comprising an attachment structure for attaching a portion of the wind turbine blade to the respective fixture, wherein the attachment structure of the first fixture is adapted to receive the circular root end of the blade such that the circular root end is eccentric with respect to the first fixture. In other words, the geometric centre of the circular cross section at the blade root end is offset from the geometric centre of the first fixture. This was found to enable a particular efficient turning/rotation of the wind turbine blade, with minimal energy input needed to provide turning/rotation motion.

The apparatus is advantageously used to support the wind turbine part above a ground surface, preferably in a substantially horizontal orientation, for example for carrying out a post-moulding operation.

It will be understood that any of the embodiments and features described above in relation to the method of rotating a wind turbine part likewise apply to the assembly and to the apparatus of the present invention, and vice versa.

As used herein, the term "longitudinal" means an axis or direction running substantially parallel to the maximum linear dimension of the element in question, for example a wind turbine blade.

### Detailed description of the invention

The invention is explained in detail below with reference to embodiments shown in the drawings, in which
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 is a schematic illustration of an assembly and a method of rotating a wind turbine blade of the present invention,
Fig. 6 shows a perspective view of the assembly according to the present invention,
Fig. 7 is a more detailed perspective view of a second fixture according to the present invention,
Fig. 8 is a more detailed perspective view of a first fixture according to the present invention,
Fig. 9 is a schematic end view of an assembly according to the present invention in two different rotational positions,
Fig. 10 illustrates a clamping collar of the present invention in an open and in a closed state, and
Figs. 11-13 illustrate different stages of a method of using the clamping collar with the assembly of the present invention.

### Detailed description

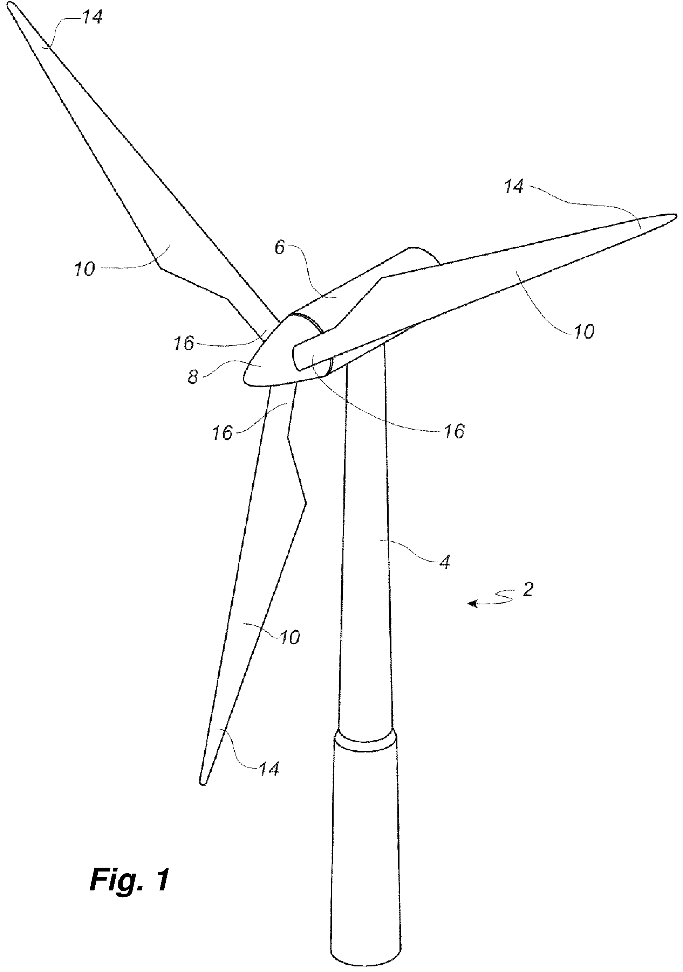

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

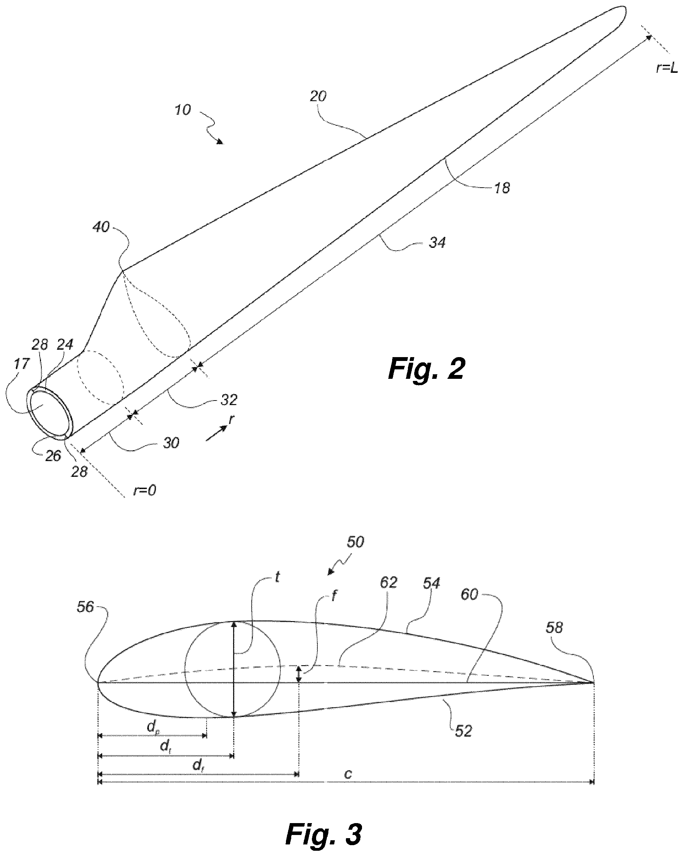

Fig. 2 shows a schematic view of an embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

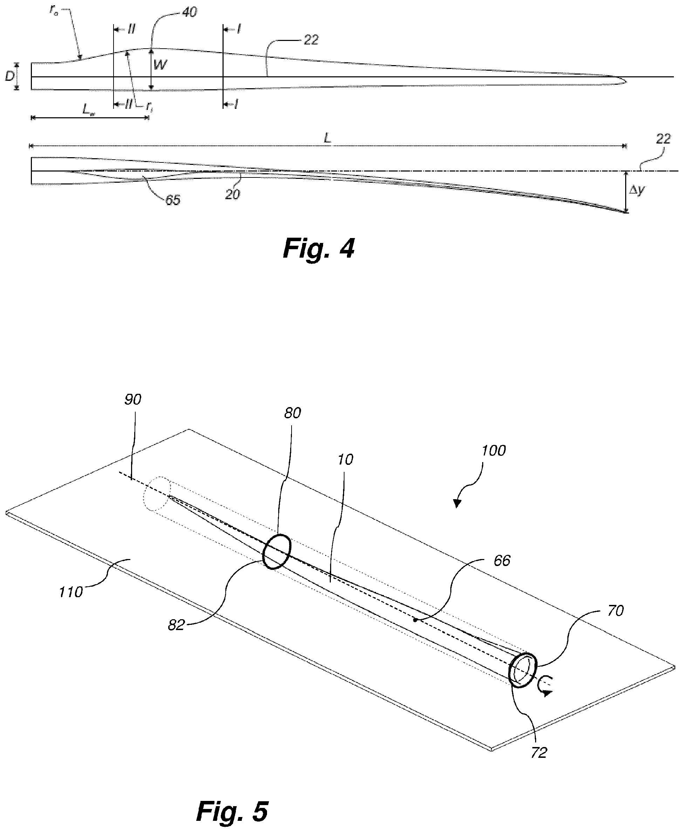

Figs. 3 and 4 depict parameters which are used to explain the geometry of the wind turbine blade according to the invention. Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use- i.e. during rotation of the rotor - normally face towards the windward (or upwind) side and the leeward (or downwind) side, respectively. The airfoil 50 has a chord 60 with a chord length *c* extending between a leading edge 56 and a trailing edge 58 of the blade. The airfoil 50 has a thickness *t*, which is defined as the distance between the pressure side 52 and the suction side 54. The thickness *t* of the airfoil varies along the chord 60. The deviation from a symmetrical profile is given by a camber line 62, which is a median line through the airfoil profile 50.

The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length *c*, the maximum camber *f*, the position *d_{f}* of the maximum camber *f*, the maximum airfoil thickness *t*, which is the largest diameter of the inscribed circles along the median camber line 62, the position *dₜ* of the maximum thickness *t,* and a nose radius (not shown). These parameters are typically defined as ratios to the chord length *c*. Thus, a local relative blade thickness *t*/*c* is given as the ratio between the local maximum thickness *t* and the local chord length *c*. Further, the position *dₚ* of the maximum pressure side camber may be used as a design parameter, and of course also the position of the maximum suction side camber.

Fig. 4 shows other geometric parameters of the blade. The blade has a total blade length *L*. As shown in Fig. 3, the root end is located at position *r* = 0, and the tip end located at *r* = *L.* The shoulder 40 of the blade is located at a position *r* = *L_{w},* and has a shoulder width *W,* which equals the chord length at the shoulder 40. The diameter of the root is defined as *D*. The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy,* which corresponds to the out of plane deflection from a pitch axis 22 of the blade.

Fig. 5 is a schematic illustration of the principle used in the present invention. It has been found that the blade 10 can be easily rotated when it is supported in a substantially horizontal position such that its centre of gravity 66 lies on the central/rotational axis 90 of a notional/virtual tube or cylinder, as illustrated by the dashed line in Fig. 5. The illustrated tube will usually not be part of the assembly of the present invention and is shown only for illustrating the underlying concept. This arrangement minimizes that force required to rotate the blade from any given rotational position into another rotational position. In Fig. 5 the fixtures 70, 80 are illustrated in simplified form as annular members or disks.

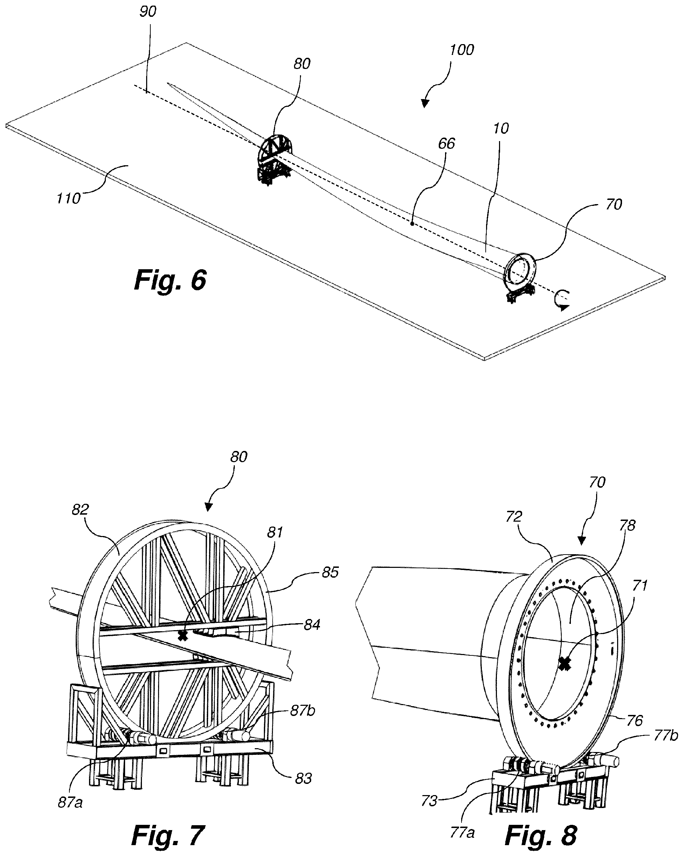

Fig. 6 is a perspective view of an assembly 100 for rotating a wind turbine blade 10 of the present invention, using the above-discussed approach. The method of rotating a wind turbine blade 10 comprises the steps of providing a wind turbine blade 10 and determining its centre of gravity 66. The centre of gravity of the blade is advantageously calculated, for example using a CAD model. A first fixture 70 and a second fixture 80 are then provided, each comprising a circular or partly circular periphery 72, 82 and a centre 71, 81, which is best seen in Figs. 7 and 8.

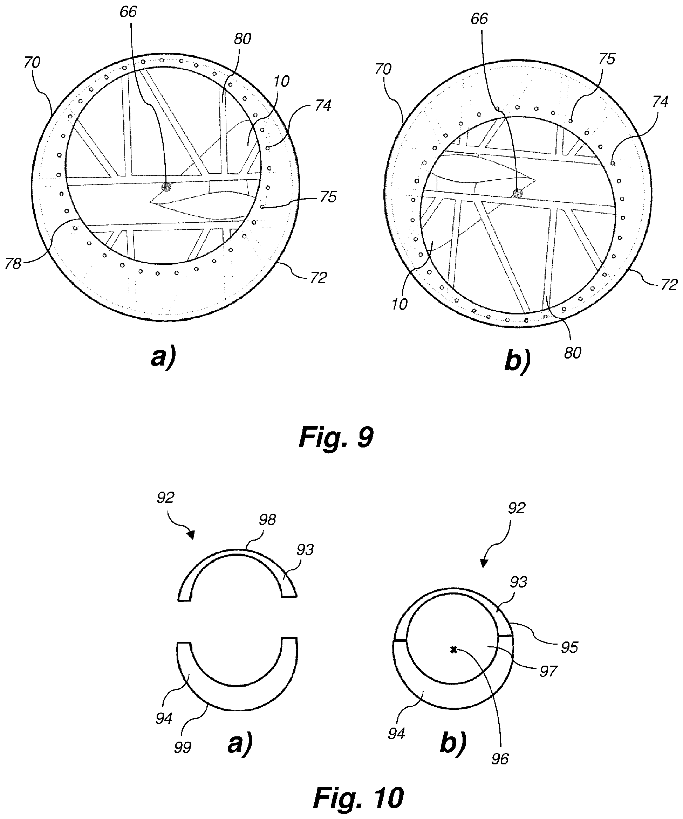

In the illustrated embodiment, the first fixture 70 comprises a circular plate 76 with a circular opening 78 which is eccentric with respect to the circular plate 76; see Figs. 8 and 9. The first fixture 70 is mounted to the root end of the blade which usually has a substantially circular cross section; see e.g. Fig. 2, root end 17. To this end, the illustrated first fixture 70 comprises a holding device comprising a plurality of fastening members 75, which may take the form of bore and/or bushings, or alternatively bolts, which are arranged along a circular or partly circular path 74 around the opening 78. Thus, also the circular path 74 is eccentric with respect to the first fixture 70, as seen in Fig. 8. As also illustrated in Fig. 9, the opening 78 in the first fixture can be aligned with the circular opening at the root end of the blade, wherein the centre of the opening 78 is offset from the centre of the first fixture and thus from the rotational axis.

The root end of the blade typically likewise comprises a bolt circle or circular arrangement of bushings which is used to fasten the root end of the blade to the hub. Advantageously, this arrangement can be used to detachably connect the first fixture to the root end of the blade, e.g. by using a plurality of bolts.

Similarly, the second fixture 80 comprises a holding device 84 in the form of a bracket 84 for releasably fastening a portion closer to the tip end of the wind turbine blade 10 to the fixture; see Fig. 7. Also, the second fixture 80 comprises a circular frame 85. Further, it is preferred that the first fixture 70 and/or the second fixture 80 are rotatably arranged on a respective base member 73, 83, each comprising a set of drive wheels or rollers 77a, 77b, 87a, 87b which can be used to rotate the respective fixture on the base. Also, both of the fixtures 70, 80 have a centre 71, 81 as illustrated in Figs. 7 and 8.

The first fixture 70 and the second fixture 80 are attached to the wind turbine blade 10, such that the centre of gravity 66 of the blade 10 is located between the first fixture 70 and the second fixture 80, wherein the respective centres 71, 81 of the first fixture 70 and the second fixture 80 are aligned with the centre of gravity 66 of the wind turbine blade 10 for defining a common rotational axis 90. This enables rotating the wind turbine blade 10 about said common rotational axis by simultaneously rotating the first and the second fixture 80 with minimal force required. Preferably, the common rotational axis 90 is a substantially horizontal axis as illustrated in Fig. 6, which illustrates the assembly standing on a floor surface 110, e.g. a factory floor.

The alignment of the present invention is further illustrated in the end view of Fig. 9 which shows a view seen from the root end of the blade or from the first fixture 70 in two different rotational positions; see a) and b). For illustration purposes the portion of the blade which is located in between the first and the second fixture is removed from the figure. Also, the respective bases of the fixtures are omitted in this figure for simplification. The root end of the blade is attached to the first fixture 70 using the circular arrangement 74 of fastening members 75. As seen in Fig. 9, the centre of gravity 66 of the blade 10 is perfectly aligned with the respective centres of the first fixture 72 and the second fixture, part of which is illustrated with a dashed line. Thus, all three points lie on a line which forms the rotational axis of the arrangement. Fig. 9b shows a rotational position wherein the blade has been rotated clockwise or anticlockwise about the rotational axis about 180 degrees apart from the rotational position of Fig. 9a. Thus, it is seen that the blade rotation is eccentric with respect to the centre of the circular blade root.

Fig. 10 illustrates a clamping collar 92, which can be used in one embodiment of the rotation method of the present invention. The clamping collar comprises a first piece 93 and a second piece 94, each comprising a substantially semi-circular periphery 98, the first and second piece 93, 94 defining an opening 97 there between. The first piece 93 and the second piece 94 can be connected to each other, see Fig. 10, for closing the clamping collar around a third portion of the wind turbine blade. The opening 97 is designed for receiving a part of the wind turbine blade 10, i.e., to clamp and enclose a portion of the wind turbine blade between the first piece 93 and the second piece 94. As best seen in Fig. 10b, the opening 97 is eccentric with respect to the clamping collar 92, in that the centre of the opening is offset from the centre 96 of the clamping collar.

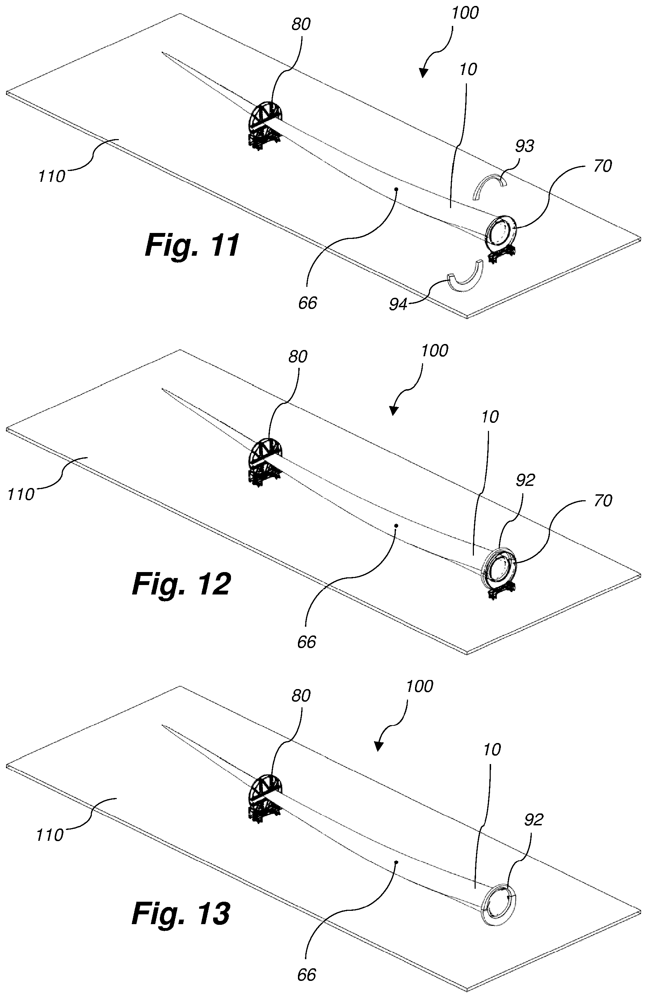

As illustrated in Figs. 11-13, the clamping collar 92 is attached around a third portion of the wind turbine blade 10, preferably close to the first fixture or adjacent to the first fixture, but slightly further removed from the root end of the blade. It is preferred that the third portion of the blade to which the clamping collar is attached is located between the first and the second portion to which the first and second fixtures are attached. The clamping collar comprises a circular periphery 95 and a centre 96, wherein the centre 96 of the clamping collar and the respective centres of the first fixture 70 and the second fixture 80 are aligned with the centre of gravity 66 of the wind turbine blade 10 for defining a common rotational axis.

As illustrated in Figs. 12 and 13, the first fixture 70 is then removed from the wind turbine blade 10, allowing the wind turbine blade 10 to be rotated about said common rotational axis by simultaneously rotating the second fixture 80 and the clamping collar 92. Thus, this provides an effective way of replacing the functionality of the first fixture by the clamping collar 92, for example, in situations where a free root end of the blade is required during post-moulding operations.

The invention is not limited to the embodiments described herein, and may be modified or adapted without departing from the scope of the present invention.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: camber line / median line
- 66: centre of gravity of blade
- 70: first fixture
- 71: centre of first fixture
- 72: circular periphery of first fixture
- 73: base member for first fixture
- 74: circular path of fastening members
- 75: fastening member
- 76: circular plate
- 77: rollers
- 78: opening of first fixture
- 80: second fixture
- 81: centre of second fixture
- 82: circular periphery of second fixture
- 83: base member for second fixture
- 84: bracket
- 85: circular frame
- 87: rollers
- 90: rotational axis
- 92: clamping collar
- 93: first piece of clamping collar
- 94: second piece of clamping collar
- 95: circular periphery of clamping collar
- 96: centre of clamping collar
- 97: opening of clamping collar
- 98: semi-circular periphery
- 99: semi-circular periphery
- 100: assembly
- 110: floor surface
- *c*: chord length
- *dₜ*: position of maximum thickness
- *d_{f}*: position of maximum camber
- *dₚ*: position of maximum pressure side camber
- *f*: camber
- *L*: blade length
- *r*: local radius, radial distance from blade root
- *t*: thickness
- Δ*y*: prebend

## Claims

1. A method of rotating a wind turbine blade (10) comprising the steps of
providing a wind turbine blade (10),
determining the centre of gravity (66) of the wind turbine blade (10),
providing a first fixture (70) and a second fixture (80), each comprising a circular or partly circular periphery (72, 82) and a centre (71, 81),
attaching the first fixture (70) to a first portion of the wind turbine blade (10),
attaching the second fixture (80) to a second portion of the wind turbine blade (10), such that the centre of gravity (66) of the blade (10) is located between the first fixture (70) and the second fixture (80), wherein the respective centres of the first fixture (70) and the second fixture (80) are substantially aligned with the centre of gravity (66) of the wind turbine blade (10) for defining a common rotational axis (90), and
rotating the wind turbine blade (10) about said common rotational axis by simultaneously rotating the first and the second fixture (80).

2. A method according to claim 1, wherein the first fixture (70) and/or the second fixture (80) are rotatably arranged on a respective base member (73, 83).

3. A method according to claims 1 or 2, wherein the common rotational axis (90) is a substantially horizontal axis.

4. A method according to any of the preceding claims, wherein each of the first fixture (70) and the second fixture (80) comprise a holding device (74, 84) for releasably fastening at least part of the wind turbine blade (10) to the respective fixture.

5. A method according to claim 4, wherein the holding device of the second fixture (80) comprises a bracket (84) or a set of jaws.

6. A method according to claims 4 and 5, wherein the holding device of the first fixture (70) comprises a plurality of bores and/or fastening members (75) arranged along a circular or partly circular path (74).

7. A method according to claim 6, wherein the circular or partly circular path (74) is eccentric with respect to the first fixture (70).

8. A method according to any of the preceding claims, wherein the first fixture (70) comprises a circular plate (76).

9. A method according to any of the preceding claims, wherein the second fixture (80) comprises a circular frame (85).

10. A method according to any of the preceding claims, further comprising the steps of attaching a clamping collar (92) around a third portion of the wind turbine blade (10), the clamping collar comprising a circular or partly circular periphery and a centre, wherein the centre of the clamping collar and the respective centres of the first fixture (70) and the second fixture (80) are aligned with the centre of gravity (66) of the wind turbine blade (10) for defining a common rotational axis,
removing the first fixture (70) from the wind turbine blade (10), and
rotating the wind turbine blade (10) about said common rotational axis by simultaneously rotating the second fixture (80) and the clamping collar.

11. A method according to claim 10, wherein the clamping collar comprises an opening (97) for receiving a portion of the wind turbine blade (10) therein, wherein the opening (97) is eccentric with respect to the clamping collar.

12. A method according to claims 10 or 11, wherein the clamping collar comprises a first piece (93) and a second piece (94) defining an opening (97) there between, wherein each of the first piece (93) and the second piece (94) comprise a substantially semi-circular periphery.

13. An assembly (100) for rotating a wind turbine blade (10), the assembly comprising
a wind turbine blade (10),
a first fixture (70) and a second fixture (80), each comprising a circular or partly circular periphery (72, 82) and a centre (71, 81), the first fixture (70) being attached to a first portion of the wind turbine blade (10), and the second fixture (80) being attached to a second portion of the wind turbine blade (10),
**characterised in that**
the centre of gravity (66) of the blade (10) is located between the first fixture (70) and the second fixture (80), and wherein the respective centres of the first fixture (70) and the second fixture (80) are substantially aligned with the centre of gravity (66) of the wind turbine blade (10) for defining a common rotational axis for rotating the wind turbine blade (10).

14. An assembly (100) according to claim 13, wherein the first fixture (70) and/or the second fixture (80) are rotatably arranged on a respective base member.

15. An assembly (100) according to claim 14, wherein each base member comprises a set of rollers or drive wheels for engaging and rotating the respective fixture arranged in the base member.

## Patentansprüche

1. Verfahren zum Drehen einer Windturbinenschaufel (10), das die folgenden Schritte umfasst
Bereitstellen einer Windturbinenschaufel (10),
Bestimmen des Schwerpunkts (66) der Windturbinenschaufel (10),
Bereitstellen einer ersten Befestigung (70) und einer zweiten Befestigung (80), die jeweils einen kreisförmigen oder teilweise kreisförmigen Umfang (72, 82) und ein Zentrum (71, 81) umfassen,
Anbringen der ersten Befestigung (70) an einem ersten Abschnitt der Windturbinenschaufel (10),
Anbringen der zweiten Befestigung (80) an einem zweiten Abschnitt der Windturbinenschaufel (10) derart, dass der Schwerpunkt (66) der Schaufel (10) zwischen der ersten Befestigung (70) und der zweiten Befestigung (80) gelegen ist, wobei die jeweiligen Zentren der ersten Befestigung (70) und der zweiten Befestigung (80) im Wesentlichen mit dem Schwerpunkt (66) der Windturbinenschaufel (10) ausgerichtet sind, um eine gemeinsame Drehachse (90) zu definieren, und
Drehen der Windturbinenschaufel (10) um die gemeinsame Drehachse durch gleichzeitiges Drehen der ersten und der zweiten Befestigung (80).

2. Verfahren nach Anspruch 1, wobei die erste Befestigung (70) und/oder die zweite Befestigung (80) drehbar auf einem jeweiligen Basiselement (73, 83) angeordnet ist/sind.

3. Verfahren nach Anspruch 1 oder 2, wobei die gemeinsame Drehachse (90) eine im Wesentlichen horizontale Achse ist.

4. Verfahren nach einem der vorstehenden Ansprüche, wobei jede der ersten Befestigung (70) und der zweiten Befestigung (80) eine Haltevorrichtung (74, 84) zum lösbaren Befestigen von mindestens einem Teil der Windturbinenschaufel (10) an der jeweiligen Befestigung umfasst.

5. Verfahren nach Anspruch 4, wobei die Haltevorrichtung der zweiten Befestigung (80) einen Träger (84) oder einen Backensatz umfasst.

6. Verfahren nach Anspruch 4 und 5, wobei die Haltevorrichtung der ersten Befestigung (70) eine Vielzahl von Bohrungen und/oder Befestigungselementen (75) umfasst, die entlang eines kreisförmigen oder teilweise kreisförmigen Pfads (74) angeordnet sind.

7. Verfahren nach Anspruch 6, wobei der kreisförmige oder teilweise kreisförmige Pfad (74) in Bezug auf die erste Befestigung (70) exzentrisch ist.

8. Verfahren nach einem der vorstehenden Ansprüche, wobei die erste Befestigung (70) eine kreisförmige Platte (76) umfasst.

9. Verfahren nach einem der vorstehenden Ansprüche, wobei die zweite Befestigung (80) einen kreisförmigen Rahmen (85) umfasst.

10. Verfahren nach einem der vorstehenden Ansprüche, weiter umfassend die Schritte des Anbringens eines Klemmrings (92) um einen dritten Abschnitt der Windturbinenschaufel (10), wobei der Klemmring einen kreisförmigen oder teilweise kreisförmigen Umfang und ein Zentrum umfasst, wobei das Zentrum des Klemmrings und die jeweiligen Zentren der ersten Befestigung (70) und der zweiten Befestigung (80) mit dem Schwerpunkt (66) der Windturbinenschaufel (10) ausgerichtet sind, um eine gemeinsame Drehachse zu definieren,
des Entfernens der ersten Befestigung (70) von der Windturbinenschaufel (10), und
des Drehens der Windturbinenschaufel (10) um die gemeinsame Drehsachse durch gleichzeitiges Drehen der zweiten Befestigung (80) und des Klemmrings.

11. Verfahren nach Anspruch 10, wobei der Klemmring eine Öffnung (97) zum Aufnehmen eines Abschnitts der Windturbinenschaufel (10) darin umfasst, wobei die Öffnung (97) in Bezug auf den Klemmring exzentrisch ist.

12. Verfahren nach Anspruch 10 oder 11, wobei der Klemmring ein erstes Stück (93) und ein zweites Stück (94) umfasst, die eine Öffnung (97) dazwischen definieren, wobei jedes des ersten Stücks (93) und des zweiten Stücks (94) einen im Wesentlichen halbkreisförmigen Umfang umfasst.

13. Anordnung (100) zum Drehen einer Windturbinenschaufel (10), wobei die Anordnung Folgendes umfasst
eine Windturbinenschaufel (10),
eine erste Befestigung (70) und eine zweite Befestigung (80), die jeweils einen kreisförmigen oder teilweise kreisförmigen Umfang (72, 82) und ein Zentrum (71, 81) umfassen, wobei die erste Befestigung (70) an einem ersten Abschnitt der Windturbinenschaufel (10) angebracht ist und die zweite Befestigung (80) an einem zweiten Abschnitt der Windturbinenschaufel (10) angebracht ist,
**dadurch gekennzeichnet, dass**
der Schwerpunkt (66) der Schaufel (10) zwischen der ersten Befestigung (70) und der zweiten Befestigung (80) gelegen ist, und wobei die jeweiligen Zentren der ersten Befestigung (70) und der zweiten Befestigung (80) im Wesentlichen mit dem Schwerpunkt (66) der Windturbinenschaufel (10) ausgerichtet sind, um eine gemeinsame Drehachse zum Drehen der Windturbinenschaufel (10) zu definieren.

14. Anordnung (100) nach Anspruch 13, wobei die erste Befestigung (70) und/oder die zweite Befestigung (80) drehbar auf einem jeweiligen Basiselement angeordnet ist/sind.

15. Anordnung (100) nach Anspruch 14, wobei jedes Basiselement einen Satz von Rollen oder Antriebsrändern zum Eingreifen und Drehen der jeweiligen in dem Basiselement angebrachten Befestigung umfasst.

## Revendications

1. Procédé de rotation de pale d'éolienne (10) comprenant les étapes consistant à fournir une pale d'éolienne (10),
déterminer le centre de gravité (66) de la pale d'éolienne (10),
fournir un premier accessoire (70) et un second accessoire (80), comprenant chacun une périphérie circulaire ou partiellement circulaire (72, 82) et un centre (71, 81),
fixer le premier accessoire (70) à une première partie de la pale d'éolienne (10),
fixer le second accessoire (80) à une deuxième partie de la pale d'éolienne (10), de sorte que le centre de gravité (66) de la pale (10) soit situé entre le premier accessoire (70) et le second accessoire (80), dans lequel les centres respectifs du premier accessoire (70) et du second accessoire (80) sont sensiblement alignés avec le centre de gravité (66) de la pale d'éolienne (10) pour définir un axe de rotation commun (90), et
faire tourner la pale d'éolienne (10) autour dudit axe de rotation commun par la mise en rotation simultanée du premier et du second accessoires (80).

2. Procédé selon la revendication 1, dans lequel le premier accessoire (70) et/ou le second accessoire (80) sont agencés de manière rotative sur un élément de base (73, 83) respectif.

3. Procédé selon les revendications 1 ou 2, dans lequel l'axe de rotation commun (90) est un axe sensiblement horizontal.

4. Procédé selon l'une quelconque des revendications précédentes, dans lequel chacun du premier accessoire (70) et du second accessoire (80) comprend un dispositif de maintien (74, 84) pour fixer de manière libérable au moins une partie de la pale d'éolienne (10) à l'accessoire respectif.

5. Procédé selon la revendication 4, dans lequel le dispositif de maintien du second accessoire (80) comprend un support (84) ou un ensemble de mâchoires.

6. Procédé selon les revendications 4 et 5, dans lequel le dispositif de maintien du premier accessoire (70) comprend une pluralité d'alésages et/ou d'éléments de fixation (75) agencés le long d'une trajectoire circulaire ou partiellement circulaire (74).

7. Procédé selon la revendication 6, dans lequel la trajectoire circulaire ou partiellement circulaire (74) est excentrique par rapport au premier accessoire (70).

8. Procédé selon l'une quelconque des revendications précédentes, dans lequel le premier accessoire (70) comprend une plaque circulaire (76).

9. Procédé selon l'une quelconque des revendications précédentes, dans lequel le second accessoire (80) comprend un cadre circulaire (85).

10. Procédé selon l'une quelconque des revendications précédentes, comprenant en outre les étapes consistant à fixer un collier de serrage (92) autour d'une troisième partie de la pale d'éolienne (10), le collier de serrage comprenant une périphérie circulaire ou partiellement circulaire et un centre,
dans lequel le centre du collier de serrage et les centres respectifs du premier accessoire (70) et du second accessoire (80) sont alignés avec le centre de gravité (66) de la pale d'éolienne (10) pour définir un axe de rotation commun,
retirer le premier accessoire (70) de la pale d'éolienne (10), et
faire tourner la pale d'éolienne (10) autour dudit axe de rotation commun par la mise en rotation simultanée du second accessoire (80) et du collier de serrage.

11. Procédé selon la revendication 10, dans lequel le collier de serrage comprend une ouverture (97) pour recevoir une partie de la pale d'éolienne (10) dans celle-ci, dans lequel l'ouverture (97) est excentrique par rapport au collier de serrage.

12. Procédé selon les revendications 10 ou 11, dans lequel le collier de serrage comprend une première pièce (93) et une seconde pièce (94) définissant une ouverture (97) entre celles-ci, dans lequel chacune de la première pièce (93) et de la seconde pièce (94) comprend une périphérie sensiblement semi-circulaire.

13. Ensemble (100) pour faire tourner une pale d'éolienne (10), l'ensemble comprenant
une pale d'éolienne (10),
un premier accessoire (70) et un second accessoire (80), comprenant chacun une périphérie circulaire ou partiellement circulaire (72, 82) et un centre (71, 81), le premier accessoire (70) étant fixé à une première partie de la pale d'éolienne (10), et le second accessoire (80) étant fixé à une deuxième partie de la pale d'éolienne (10),
**caractérisé en ce que** le centre de gravité (66) de la pale (10) est situé entre le premier accessoire (70) et le second accessoire (80), et dans lequel les centres respectifs du premier accessoire (70) et du second accessoire (80) sont sensiblement alignés avec le centre de gravité (66) de la pale d'éolienne (10) de manière à définir un axe de rotation commun pour faire tourner la pale d'éolienne (10).

14. Ensemble (100) selon la revendication 13, dans lequel le premier accessoire (70) et/ou le second accessoire (80) sont agencés de manière rotative sur un élément de base respectif.

15. Ensemble (100) selon la revendication 14, dans lequel chaque élément de base comprend un ensemble de galets ou de roues d'entraînement pour venir en prise avec et faire tourner l'accessoire respectif agencé dans l'élément de base.
